(19) Europäisches Patentamt
European Patent Office
Office européen des brevets

(11) EP 0 839 771 B1

(12) **FASCICULE DE BREVET EUROPEEN**

(45) Date de publication et mention de la délivrance du brevet:
**02.04.2003 Bulletin 2003/14**

(51) Int Cl.[7]: **C03C 17/42**, C03C 17/38

(21) Numéro de dépôt: **97402562.9**

(22) Date de dépôt: **29.10.1997**

(54) **Elément vitré à couche(s)**

Schichtverglasungselement

Layered glass element

(84) Etats contractants désignés:
**AT BE CH DE DK ES FI FR GB IT LI LU NL PT SE**

(30) Priorité: **29.10.1996 FR 9613173**

(43) Date de publication de la demande:
**06.05.1998 Bulletin 1998/19**

(73) Titulaire: **SAINT-GOBAIN GLASS FRANCE**
**92400 Courbevoie (FR)**

(72) Inventeurs:
- **Halleux, Jean-Marc**
  **5081 La Bruyere (BE)**
- **Lehmann, Yves**
  **5310 Liernu (BE)**
- **Rouberol, Marc**
  **92000 Boulogne Billancourt (FR)**

(74) Mandataire: **Renous Chan, Véronique et al**
**Saint-Gobain Recherche,**
**39, Quai Lucien Lefranc**
**93300 Aubervilliers (FR)**

(56) Documents cités:

| | |
|---|---|
| **EP-A- 0 476 510** | **EP-A- 0 545 201** |
| **WO-A-91/16197** | **DE-C- 4 204 763** |
| **US-A- 4 710 426** | **US-A- 5 264 286** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 839 771 B1

## Description

L'invention concerne les éléments vitrés à couche(s).

On comprend par couche(s), la couche ou l'empilement de couches minces, notamment essentiellement minérale(s), que l'on dépose à la surface d'un substrat susceptible d'être incorporé dans un élément vitré pour lui conférer des propriétés spécifiques.

On comprend par élément vitré, tout élément composé d'au moins un substrat rigide et dont les matériaux constitutifs sont essentiellement transparents.

On peut en fait, de manière non limitative, distinguer deux catégories d'éléments vitrés :

☐ d'une part, les éléments vitrés peuvent être destinés à autoriser la vision. Il s'agit bien sûr des vitrages utilisés par exemple pour équiper les façades extérieures de bâtiment ou tout type de véhicule. Dans ce cas, on peut chercher à les « fonctionnaliser » à l'aide d'empilements de couches de compositions très variées. Pour une fonction anti-statique ou chauffante du type anti-buée, notamment on peut prévoir des couches minces conductrices électriquement, par exemple à base de métal ou d'oxyde métallique dopé. Pour une fonction thermique, de bas-émissivité ou de contrôle solaire, par exemple, on peut se tourner vers des couches minces de métal du type argent, à base de nitrure métallique, ou d'oxyde métallique dopé ou non,

☐ d'autre part, les éléments vitrés peuvent être opacifiés afin d'interdire la vision. Il s'agit essentiellement des miroirs ou des parements de panneau de façade, (ci-après désignés sous le terme de « parements »), du type allèges. Dans le cas des miroirs, on utilise usuellement au moins une couche d'un matériau réfléchissant d'épaisseur suffisante pour obtenir l'effet miroir recherché. Il peut s'agir d'argent, de cuivre, d'aluminium. Dans le cas des parements, on se contente souvent d'utiliser la même couche ou le même empilement de couches que celles utilisées sur les vitrages autorisant la vision qui vont se trouver adjacents aux parements, une fois montés en façade d'immeuble : on s'assure ainsi d'une homogénéité d'aspect d'optique de l'ensemble de la façade ainsi équipée, vue de l'extérieur, à la fois du point de vue colorimétrique et du point de vue de l'intensité de la réflexion.

Que l'élément vitré appartienne à la première ou à la seconde catégorie, il peut présenter une structure telle qu'il associe à un substrat rigide minéral du type verre revêtu de couche(s) mince(s) un matériau organique ou organo-minéral. C'est aussi le cas des vitrages autorisant la vision, notamment du type vitrage feuilleté, où généralement deux substrats de verre, dont l'un au moins peut être être revêtu de couches minces, sont associés à l'aide d'une feuille à base de polymère thermoplastique du type polyvinylbutyral PVB, par une opération de calandrage à chaud et/ou passage en autoclave. C'est également le cas des éléments vitrés opacifiés, car le moyen le plus fréquemment utilisé pour obtenir l'opacification d'un vitrage consiste à déposer à la surface du substrat rigide type verre (revêtu de couches) du vitrage un revêtement à base de polymère opaque.

On peut également mentionner les vitrages qui utilisent des empilements de couches minces de type minéral associés à une couche de matériau en polymère dit « fonctionnel », c'est-à-dire présentant une propriété particulière. Il peut s'agir, par exemple, des polymères à propriétés de conduction ionique, qui sont utilisés en tant qu'électrolyte dans des vitrages électrochimiquement actifs tels que les vitrages électrochromes. On peut citer les matériaux à base de solution de polyoxyéthylène et de $H_3PO_4$ en tant qu'électrolyte protonique, tels que ceux décrits dans les brevets EP-253 713 et EP-670 346, ou les matériaux à base de polyéthylèneimine branché et de sel de lithium en tant qu'électrolyte conducteur de $Li^+$ tels que ceux décrits dans le brevet européen EP-518 754.

Comme autre type de polymère « fonctionnel », on comprend aussi les polymères à propriétés électroniques, notamment ceux utilisés dans les vitrages électroluminescents.

Pour tous ces éléments vitrés, il est nécessaire d'assurer une adhérence suffisante entre leurs différents matériaux constitutifs, tout particulièrement à l'interface entre le substrat rigide, notamment minéral du type verre et le matériau organique type polymère, adhérence que l'on peut notamment, si besoin, améliorer à l'aide d'un agent promoteur d'adhérence du type silane.

Mais cela ne suffit pas : il faut également que cette adhérence soit maintenue, et qu'une fois l'élément vitré monté dans le bâtiment ou le véhicule, il présente la durabilité requise.

Or il s'est avéré que des éléments vitrés de ce type, associant des substrats rigides du type verre recouverts de couches minces et mis au contact de feuille(s), de nature essentiellement organique, présentaient, seulement dans certains cas, une durabilité dans le temps insuffisante, se traduisant par des défauts optiques et/ou mécaniques, voire une véritable « délamination » de l'élément, ne se révélant qu'après plusieurs mois ou même plusieurs années après le montage.

Le but de l'invention est de remédier à ce problème, notamment en parvenant à garantir à des éléments vitrés associant à au moins un substrat rigide ou semi-rigide, notamment minéral du type verre, un matériau organique du type polymère et des couches minces, une durabilité suffisante et reproductible.

L'objet de l'invention est un panneau de parement de façade du type allège consistant à ajouter un vernis

opacifiant à un vitrage autorisant la vision et muni d'un empilement de couches minces filtrant une partie du rayonnement solaire de façon ce que l'empilement de couches minces et le vernis opacifiant soient en contact, la dernière couche dudit empilement, à base de matériau diélectrique, est un nitrure, carbure, oxynitrure ou oxycarbure et dont la différence de niveau d'énergie entre bande de conduction et bande de valence est d'au moins 4 e.v. et fait « écran » par rapport à une couche de l'empilement présentant une activité photocatalytique vis-à-vis dudit vernis opacifiant.

De manière générale, dans la suite de la description, l'élément vitré selon l'invention comprend au moins un substrat rigide de préférence en verre et une feuille de matériau essentiellement organique entre lesquels se trouve la couche ou l'empilement de couches. Dans le cas d'un empilement, l'important est que la couche de l'empilement en contact avec ou la plus proche de la feuille en matériau organique soit non ou peu photocatalytique : c'est la « dernière » couche évoquée plus haut. Mais l'invention concerne également les éléments vitrés où le substrat rigide peut, lui, aussi, être de nature essentiellement organique du type polymère. C'est le cas, notamment, des plymères appartenant à la famille des polycarbonates PC, ou du polyméthacrylate de méthyle PMMA. Dans ce cas, il peut être préférable de considérer aussi la première couche de l'empilement, c'est-à-dire celle de l'empilement qui se trouve en contact avec le substrat rigide à base de polymère, et de prévoir éventuellement qu'elle aussi n'ait pas, ou que faiblement, des propriétés photocatalytiques.

On comprend par ailleurs par matériau « hybride », un matériau pour partie minéral et pour partie organique, du type des matériaux que l'on peut par exemple obtenir par une synthèse par voie sol-gel.

Dans le cadre de l'invention, le matériau essentiellement organique ou hybride peut se présenter sous la forme d'une feuille, comme évoqué précédemment. Cette feuille peut être continue ou discontinue. Mais le matériau peut aussi se présenter sous la forme d'une bande marginale. Il peut ainsi s'agir d'une colle périphérique, utilisée pour fixer sur des façades des vitrages dits « vitrages extérieurs collés », comme ceux commercialisés sous la dénomination « VEC » par SAINT-GOBAIN VITRAGE.

Les inventeurs sont en effet parvenus à identifier les raisons pour lesquelles on observait parfois une détérioration de l'élément vitré, détérioration progressive et d'amplitude variable selon le type de couches minces et selon l'application de l'élément vitré. En fait, le problème résidait essentiellement à l'interface couche(s)/matériau pour partie au moins organique, dans le cas où se trouvaient deux conditions cumulatives : d'une part quand la dernière couche de l'empilement, destinée, donc, à se trouver en contact direct avec le matériau organique, était en matériau présentant intrinsèquement une certaine propriété photocatalytique, d'autre part quand l'élément vitré était utilisé de manière à être exposé de façon prolongée à des rayonnements solaires et tout particulièrement des rayonnements du type ultraviolets, ce qui était le cas de tous les éléments vitrés type vitrages feuilletés équipant des véhicules ou allèges habillant des façades de bâtiment.

Dans la configuration particulière comprenant une séquence du type verre/couche(s)/matériau au moins en partie organique, on avait en fait une réaction photocatalytique initiée dans la dernière couche de l'empilement où se créaient des paires « électrons-trous » sous l'effet de rayonnements ultraviolets, venant créer dans le matériau organique du type polymère des radicaux libres qui, par des réactions en chaîne, dégradait les liaisons covalentes interfaciales entre les deux matériaux, et finissait par dégrader l'adhérence du matériau organique sur la (les) couche(s) mince(s) et/ou la détériorer complètement. Cette détérioration pouvait être d'autant plus prononcée qu'il régnait une forte humidité résiduelle dans l'atmosphère ambiante et que le vitrage était susceptible de s'échauffer, cela tout particulièrement quand il s'agissait de vitrage opacifié avec une laque à base de polymère opaque donc absorbante.

En fait, beaucoup de couches minces utilisées communément dans les éléments vitrés possèdent une certaine réactivité photocatalytique, activité photocatalytique notamment relativement prononcée s'il s'agit d'oxyde de titane, d'oxyde de zinc, et, dans une moindre mesure, d'oxyde d'étain. Le problème ne se révélait que si ces couches formaient l'unique couche ou la dernière couche de l'empilement.

L'invention a donc consisté, une fois le problème cerné, non pas à remettre complètement en question les configurations du type verre/couche(s)/polymère, qui sont par ailleurs avantageuses, car, notamment, « protégeant » les couches minces des agressions mécaniques ou chimiques extérieures, mais à adapter l'empilement de couches de façon à supprimer ou, à tout le moins, minimiser tout risque de dégradation du matériau organique par un phénomène de photocatalyse provenant des couches minces.

Plusieurs solutions s'offrent alors :

- ☐ On peut supprimer complètement la dernière couche de l'empilement, découvrant alors la couche sous-jacente ne présentant pas ou peu d'activité photocatalytique. Il est préférable alors de s'assurer que cette suppression ne va pas générer d'autres risques, par exemple dans le cas où la dernière couche servait à ajuster l'aspect optique de l'élément vitré (plus particulièrement en colorimétrie et en intensité de réflexion) et/ou à protéger les couches restantes, notamment vis-à-vis de l'oxydation ou d'éventuelles rayures, jusqu'à l'étape d'association avec le matériau polymère. L'ajustement peut s'effectuer, par exemple, en modifiant, adaptant, l'épaisseur des couches restantes.
- ☐ On peut également maintenir dans l'empilement la couche présentant une activité photocatalytique notable, parce

qu'elle présente par ailleurs des propriétés intéressantes, mais lui faire un « écran » vis-à-vis du matériau au moins pour partie organique, en la recouvrant totalement ou partiellement d'au moins une autre couche mince ne présentant pas cette propriété.

Dans le cas où l'on n'a pas un empilement de couches, mais une couche unique, on peut, de même, soit la recouvrir d'au moins une couche ne présentant pas cette propriété, soit lui trouver un matériau équivalent dans la fonction qu'elle devait remplir, mais non ou peu photocatalytique.

La couche ou la dernière couche de l'empilement est donc à sélectionner de manière appropriée. Plusieurs types de matériaux peu ou pas photocatalytiques sont possibles.

Il peut s'agir tout d'abord, d'une couche à base d'un matériau conducteur, essentiellement métallique ou métalloïde, notamment à base de Si ou d'un métal ou d'un mélange de métaux choisis dans la famille des métaux de transition, ou de la colonne 3a ou 4a du tableau périodique. De préférence, il s'agit des métaux suivants : Ta, Ti, Cr, Ni, Ag, Al, Cu, Sn, Fe, Zr.

Il peut également s'agir d'une couche à base d'au moins un de ces métaux, notamment sous forme d'un alliage, mais partiellement ou totalement nitruré, notamment sous forme d'un alliage NiCr nitruré, de ZrN ou de chrome nitruré.

La couche peut aussi être en un matériau semi-conducteur, dopé notamment par un dopage de type n, de manière à lui donner un comportement conducteur. Il peut ainsi s'agir de couche de type oxyde d'étain dopé au fluor $SnO_2$:F. En fait, il s'est avéré, que des oxydes du type $SnO_2$, qui, dans des configurations particulières (notamment présentant un certain taux de cristallisation), présentaient une certaine activité photocatalytique, perdaient tout ou partie de cette propriété, lorsqu'on les dopait, notamment par un dopage n, tout particulièrement en remplaçant une partie des oxygènes par des halogènes du type fluor.

Une explication plausible pourrait être que si un dopage augmente le nombre des « paires électrons-trous», a priori plutôt susceptibles d'amplifier tout phénomène photocatalytique, cela n'est le cas que si elles ont une durée de vie suffisante. Si ces paires se recombinent très rapidement, par exemple à la faveur de présences de défauts ou de lacunes dans le matériau considéré, cet effet amplificateur peut être supprimé et on peut même obtenir l'effet inverse. En tout cas, l'oxyde d'étain dopé au fluor s'est avéré un matériau parfaitement adapté dans le cadre de l'invention.

Il peut encore s'agir, en dernier lieu, d'une couche à base de matériau diélectrique du type oxyde, nitrure, carbure, oxynitrure ou oxycarbure, dont la différence de niveau d'énergie entre la bande de conduction et la bande de valence est d'au moins 4 e.v, notamment d'au moins 4,5 e.v. On vise plus particulièrement l'oxyde de silicium $SiO_2$ ou l'oxycarbure de silicium SiOC.

De manière générale, il est connu que les propriétés photocatalytiques d'oxyde du type $TiO_2$ étaient assez liées au taux de cristallisation et à la nature de la cristallisation du matériau. On peut, schématiquement, constater que les propriétés photocatalytiques inhérentes à un matériau donné sont d'autant plus élevées que celui-ci est fortement cristallisé. C'est la raison pour laquelle, dans le cadre de l'invention, on privilégie, pour constituer la dernière couche de l'empilement, des matériaux qui sont essentiellement amorphes.

La feuille en matériau organique ou « hybride » qui est au contact de la dernière couche de l'empilement est avantageusement à base de polymères qui peuvent être, suivant les applications visées, de nature thermoplastique ou thermodurcissable.

Il peut ainsi s'agir de résine polyester, époxyde-polyester, polyuréthane, acrylique, polyamide, polyester-uréthane, polyvinyl, fluorure de polyvinyle appelé PVDF, tout type de polycondensat, de polymères naturels du type polysaccharide, ou tout mélange de ces différents types de polymères. Ces derniers sont assez adaptés, quand ils sont choisis opaques, (par exemple par ajout d'un colorant type noir de carbone approprié) en tant que vernis opacifiant et protecteur des couches minces pour des éléments vitrés utilisés en tant que miroirs ou parements de panneau de façade type allèges. L'élément vitré peut ainsi comprendre une structure générale verre/couche(s)/feuille et, notamment, pour un miroir, une structure verre/au moins une couche réfléchissante/feuille opaque, ou, pour un parement, une structure verre/au moins une couche fonctionnelle du même type que celle d'un élément vitré autorisant la vision/feuille opaque.

Pour être incorporée dans un élément vitré autorisant la vision, la feuille est choisie avantageusement essentiellement transparente et plutôt à base de polymère thermoplastique du type polyvinylbutyral PVB, éthylènevinylacétate EVA, polyéthylènetéréphtalate PET. L'élément vitré peut alors présenter une structure de vitrage feuilleté de type verre/couche(s)/feuille/verre. Il est à noter que, dans ce type de configuration notament, les couches peuvent, selon la technique de dépôt employée, être déposées soit à la surface du verre, soit à la surface de la feuille de polymère avant l'opération de feuilletage.

Cette feuille, essentiellement transparente, peut aussi être à base de polyuréthane à propriétés d'absorbeur d'énergie, éventuellement associée à une autre couche de polymère à propriétés « auto-cicatrisantes », l'élément vitré présentant une structure de vitrage feuilleté dit « asymétrique » du type verre/couche(s)/au moins une feuille. (Pour

plus de détails sur ce type de vitrage asymétrique, on pourra se reporter, par exemple, aux brevets EP-132 198, EP-131 523, EP-389 354).

La feuille essentiellement organique selon l'invention peut être également à base de polymère « fonctionnel » du type à propriétés de conduction ionique ou à propriétés électroniques, comme mentionné précédemment.

Pour améliorer l'adhérence de la feuille organique de type polymère aux couches, (indépendamment de tout problème de défaut d'adhérence se révélant après la pose par un processus photocatalytique), on peut avoir recours, si nécessaire, à un agent promoteur d'adhérence semi-minéral, semi-organique, notamment du type de ceux appartenant à la famille des silanes tels que les organo-tri-alkoxysilanes. On peut le déposer sur la dernière couche de l'empilement, avant incorporation de la feuille de polymère, par simple pulvérisation, notamment et/ou l'introduire dans la formulation du polymère

Pour lutter plus efficacement contre tout risque de dégradation de la feuille de polymère relevant d'un processus photocatalytique, on peut, outre sélectionner de manière adéquate la dernière couche mince en contact avec elle, ajouter à la feuille de polymère des additifs anti-ultraviolets, tels que des amines à encombrement stérique parfois désignées sous le terme abrégé AES, par exemple le (bis(1,2,2,6,6)-pentaméthyl-4piperidyl)-sébaçate.

On peut aussi ajuster au mieux la nature du polymère pour réduire la quantité des fonctions réactives résiduelles du polymère susceptibles de former des radicaux libres. On peut également être vigilant quant aux éventuels additifs ou impuretés contenus dans la feuille de polymère, mais ne faisant par partie intrinsèquement du polymère, du type plastifiant, résidus de catalyseur utilisé lors de la synthèse du polymère, et éliminer ou réduire la quantité de ces composés s'ils peuvent favoriser la propagation de radicaux libres dans la feuille.

Ces ajustements de composition du polymère peuvent ainsi permettre de retarder la détérioration de l'adhérence polymère/couche mince dans le cas où celle-ci présenterait une faible activité photocatalytique.

En fait, il a été mis en évidence que la principale raison de la dégradation de la feuille de polymère provenait, lorsqu'elle avait lieu, de la propriété photocatalytique de la couche mince en contact avec elle. En supprimant ou en adaptant la couche, on remédie à cet inconvénient. Mais la mise en évidence de la propriété photocatalytique de la couche (un décollement par exemple), peut être retardée, si l'on adapte en conséquence la constitution de la feuille de polymère, par exemple en ajustant le taux ou la nature des additifs pré-mentionnés ou en ajustant la formulation du polymère.

Quelle qu'en soit la nature, la feuille de matériau au moins pour partie organique utilisée selon l'invention peut être incorporée à l'élément vitré de différentes façons : notamment dans le cas où elle est à base de polymères, elle peut être déposée sous forme solide, pulvérulente sur un substrat rigide du type verre revêtu des couches. Elle est ensuite traitée, notamment thermiquement pour que l'on obtienne un revêtement continu solide. C'est le type de dépôt préconisé dans la fabrication de miroirs ou d'allèges telle que décrite dans le brevet EP-0 678 485.

La feuille peut être, également, déposée par voie liquide, notamment par pulvérisation (le polymère étant dissous dans un solvant approprié) ou par coulée, suivie d'un traitement thermique ou autre post-traitement favorisant son durcissement/sa réticulation, toujours pour obtenir un revêtement continu solide.

Quelle que soit la forme sous laquelle la feuille est déposée, son durcissement peut aussi être obtenu en l'absence de tout traitement thermique, en laissant le polymère durcir/réticuler progressivement à température ambiante, c'est le cas lorsqu'on emploie, notamment, des polymères bi-composants auto-réticulants. Souvent le recours au traitement thermique permet en fait de contrôler le moment où s'opère le durcissement/la réticulation et/ou l'accélérer. Ce durcissement peut aussi être opéré en soumettant le polymère à des irradiations particulières, notamment en le soumettant à des rayons ultraviolets.

La feuille peut également être déposée déjà sous la forme d'un film sur le substrat, l'assemblage s'effectuant par chauffage et/ou calandrage par exemple.

Les empilements de couches auxquels s'intéresse l'invention sont très variés : il peut s'agir d'empilements comprenant au moins une couche dite « fonctionnelle », notamment apte à contrôler le rayonnement solaire et/ou à réfléchir les infrarouges, notamment une couche métallique de type NiCr éventuellement nitruré, couche associée à au moins une autre couche d'oxyde et/ou de nitrure, ce type d'empilement étant notamment décrit dans le brevet EP-0 511 901. Les couches de contrôle solaire peuvent également être à base de nitrure métallique, notamment de nitrure de titane comme cela est décrit dans les brevets EP-638 527 et EP-650 938.

Il peut aussi s'agir d'empilements à une ou deux couches à base d'argent du type bas-émissif ou de contrôle solaire, chaque couche se trouvant disposée entre deux revêtements diélectriques ; ce type d'empilement étant notamment décrit dans les brevets EP-611 213, EP-638 528, EP-718 250.

On comprend aussi par couche « fonctionnelle» les couches bas-émissives en oxyde métallique dopé telles que celles à base d'oxyde d'étain dopé au fluor $SnO_2$:F ou à base d'oxyde d'indium dopé à l'étain ITO, comme celles décrites dans les brevets EP-573 325 ou WO-94/25410, ou des couches à base de nitrure métallique du type TiN, ZrN.

Dans tous ces empilements de contrôle solaires ou bas-émissifs, la ou les couches « fonctionnelle(s) » sont en fait usuellement associées à au moins une « sous-couche » et/ou une « sur-couche », en général en matériau diélectrique du type oxyde, nitrure, oxynitrure ou oxycarbure de silicium ou métallique.

On peut ainsi citer des empilements du type [SiOC/TiN/$TiO_2$/SiOC], [oxyde/argent/oxyde] ou [oxyde/argent/oxyde/argent/oxydel, ou [oxyde/NiCr nitruré] ou [acier/TiN ou oxyde] ou encore [SiOC/$SnO_2$:F/($SiO_2$]. Dans le cadre de l'invention, on sélectionne donc la dernière couche afin qu'elle ne présente pas d'activité photocatalytique, ou on la supprime, ou on la recouvre d'une couche non photocatalytique.

D'autres détails et caractéristiques avantageuses de l'invention ressortent ci-après d'exemples de réalisation non limitatifs, à l'aide de la figure 1, qui représente, de manière schématique, une allège (parement) selon l'invention.

Les proportions entre les épaisseurs des différents matériaux constitutifs de cet élément vitré ne sont pas respectées afin de faciliter la lecture de la figure. Tous les exemples suivants, comme représenté à la figure, concernent un parement opaque constitué d'un substrat 1 en verre clair silico-sodo-calcique de 6 mm d'épaisseur, recouvert d'une couche mince ou d'un empilement de couches minces 2, elle(s)-même(s) recouverte(s) d'un vernis opaque 3.

Ce vernis, d'une épaisseur de l'ordre de 100 à plusieurs centaines de micromètres ou plus est à base d'un mélange de polymères polyester-uréthane, obtenu par un polyester à fonctions hydroxyle auquel on associe un agent de réticulation sous forme d'un di-isocyanate. Il est déposé par voie liquide, dans un solvant type xylène sur la ou les couche(s) 2, l'évaporation du solvant et le durcissement du vernis s'effectuant par traitement thermique du substrat à 40°C pendant environ 30 minutes puis à 120°C pendant environ 30 minutes. Le vernis contient, outre le polymère, différents additifs, dont un colorant, et un promoteur d'adhérence sous forme d'un silane de formule aminopropyl-triéthoxysilane $NH_2(CH_2)_3$-Si-$(OC_2H_5)_3$. Alternativement ou cumulativement, on peut, préalablement au dépôt du vernis « activer » la surface des couches minces 2 à l'aide d'agents promoteurs d'adhérence du type silane. Qu'ils soient introduits dans la formulation de la laque et/ou déposés séparement à la surface de la dernière couche de l'empilement 2, ces silanes sont choisis de préférence dans la famille des organotrialkoxysilanes de formule $RSi(OR')_3$. On peut citer, notamment, l'aminopropyl-triéthoxysilane de formule: $H_2N-(CH_2)_3-Si-O(C_2H_5)_3$, le métacrylate-propyl-triméthoxy-silane de formule :

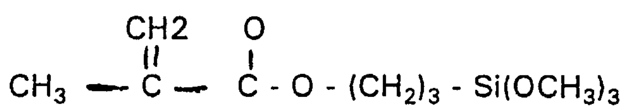

le glycidoxy-propyl-triméthoxysilane de formule :

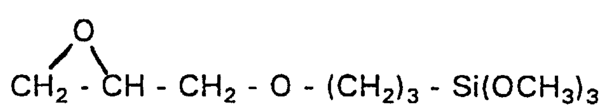

ou encore un silane à deux fonctions amine du type :

$$H_2N-(CH_2)_2-NH-(CH_2)_3\text{ -Si-}O(CH_3)_3.$$

Au lieu d'un dépôt par voie liquide, on peut, conformément à l'enseignement du brevet EP-0 678 485, déposer le vernis 3 par voie pulvérulente.

**EXEMPLE 1**

L'empilement de couches ne comporte qu'une seule couche en $SnO_2$:F de 180 nm déposée par pyrolyse de poudre, notamment par le procédé décrit dans le brevet EP-629 629.

**EXEMPLE 2 (comparaison)**

A titre de comparaison, on dépose par pulvérisation cathodique réactive une couche de 20 nm de $SnO_2$ à partir d'une cible de Sn dans une atmosphère Ar/$O_2$.

**EXEMPLE 3**

L'empilement de couches comprend une première couche de $NiCrN_x$ de 17 nm déposée par pulvérisation

cathodique à partir d'une cible en Ni/Cr 50/50 en poids, dans une atmosphère réactive $Ar/N_2$, surmontée d'une couche de $TiO_2$ de 5 nm également déposée par pulvérisation cathodique partir d'une cible de Ti dans une atmosphère réactive $Ar/O_2$.

## EXEMPLE 4

Il s'effectue comme à l'exemple 3, mais en supprimant la couche de $TiO_2$.

## EXEMPLE 5

Il s'effectue comme à l'exemple 3, mais en ajoutant une couche de $SiO_2$ de 10 nm, déposée sous vide à partir d'une cible de silice dopée au bore (ou à l'aluminium) dans une atmosphère $Ar/O_2$.

## EXEMPLE 6

L'empilement se réduit à une mono-couche de SiOC de 65 nm, déposée par pyrolyse en phase gazeuse, de manière connue, à partie d'un mélange $SiH_4/C_2H_2$.

Tous ces éléments vitrés opacifiés ainsi revêtus sont ensuite soumis à un traitement visant à simuler une exposition prolongée aux rayons ultraviolets dans une atmosphère humide : ils sont placés dans une étuve, sous rayonnement ultraviolet de puissance 0,35 $W/m^2$ à 56°C avec une humidité résiduelle de 50% pendant 1500 heures, puis ils sont plongés dans de l'eau désionisée pendant 2 heures à température ambiante (ceci afin d'éliminer les liaisons de Van der Waals à l'interface couches/vernis, et à ainsi pouvoir évaluer dans quelle mesures les liaisons covalentes seules sont conservées ou non après irradiation U.V., sachant que le phénomène de photocatalyse, s'il est présent, tend à détruire les liaisons interfaciales de nature covalente). Une portion de leur surface est masquée de manière à ne pas être exposée au rayonnement. Un test d'adhésion par quadrillage est alors réalisé en milieu humide sur les parties exposées et les parties masquées, de la façon décrite dans la norme ISO 2409.

On évalue les dégradations après test par un chiffre A sans unité dans une échelle de 0 à 5. Plus ce chiffre est élevé, plus il traduit la présence de défauts optiques et/ou mécaniques prononcés, la valeur de 5 traduisant un décollement complet du vernis.

Le tableau 1 résume, pour ces exemples, ces résultats au test, dans les zones qui ont été exposées aux ultraviolets et dans les zones masquées, en indiquant les valeurs ΔA exprimant les écarts des valeurs A entre les parties exposées et les parties masquées.

TABLEAU 1

| EXEMPLES | EMPILEMENT (2) | ΔA |
|---|---|---|
| 1 | $SnO_2$:F | 0 |
| 2 (comparatif) | $SnO_2$ | 5 |
| 3 | $NiCrN_x/TiO_2$ | 5 |
| 4 | $NiCrN_x$ | 0 |
| 5 | $NiCrN_x/TiO_2/SiO_2$ | 0 |
| 6 | SiOC | 0 |

De ce tableau peuvent être tirées les conclusions suivantes :

les résultats au test des exemples 2 et 3 traduisent le vieillissement prématuré que peuvent rencontrer certaines allèges lorsque la dernière couche mince 2 est au moins un peu photocatalytique et que l'humidité de l'atmosphère où baigne l'allège favorise le processus de dégradation du vernis par création de radicaux libres : il est clair que lorsque la dernière couche est en $SnO_2$ ou en $TiO_2$ déposé sous vide, (exemples 2 et 3) l'allège a une durabilité réduite essentiellement imputable aux propriétés photocatalytiques de ces oxydes et cela d'autant plus quand le vernis, opaque, tend à s'échauffer par absorption quand il est exposé à un fort ensoleillement, échauffement accélérant le processus de destruction des liaisons interfaciales covalentes assurant l'adhérence couche/vernis.

Par contre, ce problème est résolu si la dernière couche est en $SnO_2$:F, en $NiCrN_x$, en $SiO_2$ ou en SiOC, en ce sens que l'on a les mêmes valeurs de test que la partie soit exposée ou masquée : les effets négatifs des ultraviolets sont supprimés ou très fortement atténués.

L'exemple 3 est intéressant en ce sens qu'il a consisté à ajouter un vernis opacifiant 3 à un élément vitré de

type verre/couche d'oxyde optionnelle/$NiCrN_x$/$TiO_2$ que l'on utilise comme vitrage autorisant la vision filtrant une partie du rayonnement solaire.

En supprimant, dans l'allège , la dernière couche de $TiO_2$ dans l'exemple 4, ou en la « cachant » comme dans l'exemple 5, on peut, sans compliquer outre mesure la fabrication, parvenir à obtenir en réflexion extérieure des aspects colorimétriques tout à fait similaires entre les vitrages « vision » dont on ne modifie pas la séquence de couches filtrantes et les allèges associées contenant une couche de moins ou une couche de plus. Pour avoir exactement la même couleur en réflexion, on peut éventuellement légèrement modifier les épaisseurs des couches utilisées pour fabriquer les allèges.

Pour illustrer ce propos, on a utilisé :

☐ 1) - deux types « X », « Y » de « vitrage-vision », du type de ceux commercialisés sous le nom de « Cool-Lite » par SAINT-GOBAIN VITRAGE et qui sont des vitrages de contrôle solaire à couche fonctionnelle en NiCr nitruré, qui, dans les deux cas, est surmontée d'une dernière couche en $TiO_2$. Le substat est un verre silico-sodo-calcique monolithique clair de 6 mm d'épaisseur (le mode de dépôt et les propriétés de ce type d'empilement sont détaillés dans le brevet EP-B-511 901) :

vitrage type X : verre/$NiCrN_x$/$TiO_2$
vitrage type Y : verre/$SnO_2$/$NiCrN_x$/$TiO_2$

☐ 2) - leurs allèges « standard » habituellement associées, qui surmontent ces empilements de type X et de type Y du vernis des exemples 1 à 6 précédents :

allège « standard » type X : verre/$NiCrN_x$/$TiO_2$/vernis
allège « standard » type Y : verre/$SnO_2$/$NiCrN_x$/$TiO_2$/vernis

☐ 3) - les allèges conformes à l'invention, où l'on a retiré la dernière couche en $TiO_2$ :

☐ allège selon l'invention type X : verre/$NiCrN_x$/vernis
☐ allège selon l'invention type Y : verre/$SnO_2$/$NiCrN_x$/vernis

Ces trois séries ont été reproduites 4 fois, en faisant varier l'épaisseur de la couche de $NiCrN_x$ pour obtenir des vitrages-vision de différentes valeurs de transmission lumineuse.

Le tableau 2 ci-dessous indique, pour les vitrages-vision de type X et Y, les épaisseurs en nm des couches impliquées en fonction de la valeur de $T_L$ mesurée selon l'illuminant $D_{65}$) et exprimée en %.

TABLEAU 2

| $T_L$ (%) | **VITRAGE-VISION type X** | | **VITRAGE-VISION Type Y** | | |
|---|---|---|---|---|---|
| | $NiCrN_x$ | $TiO_2$ | $SnO_2$ | $NiCrN_x$ | $TiO_2$ |
| 8 | 38 | 7 | 88 | 38 | 7 |
| 14 | 27 | 7 | 89,5 | 29 | 7 |
| 20 | 20 | 7 | 95 | 22 | 7 |
| 32 | 13 | 5 | 98 | 13 | 7 |

Le tableau 3 ci-dessous indique, pour les allèges (3) conformes à l'invention de type « X » et « Y », les épaisseurs en nm des couches impliquées. Pour mémoire, bien que ces allèges soient évidemment opaques, le tableau mentionne également les valeurs de $T_L$ des vitrages-vision décrits au tableau 2 qui leur correspondent. Pour les allèges « standard » (2), les épaisseurs, la nature et le nombre des couches sont rigoureusement identiques à celles des vitrages-vision qui leur correspondent.

TABLEAU 3

| $T_L$ (%) | ALLEGES SELON L'INVENTION TYPE «X» (+ vernis) | | ALLEGES SELON L'INVENTION TYPE «Y» (+ vernis) | | |
|---|---|---|---|---|---|
| | $NiCrN_x$ | $TiO_2$ | $SnO_2$ | $NiCrN_x$ | $TiO_2$ |
| 8 | 40 | 0 | 38 | 40 | 0 |
| 14 | 26 | 0 | 80 | 31 | 0 |
| 20 | 19 | 0 | 80 | 24 | 0 |
| 32 | 12 | 0 | 80 | 12 | 0 |

On a ensuite mesuré l'écart colorimétrique ΔE entre :

- ☐ d'une part, les allèges dites « standard » et les vitrages-vision : ΔE (réf)
- ☐ d'autre part, les allèges selon l'invention et les vitrages-vision : ΔE (invention),

l'écart colorimétrique ΔE étant calculé de la manière suivante, en se plaçant dans le système colorimétrique (L, a*, b*) :

$$\Delta E = (\Delta L^2 + \Delta a^{*2} + \Delta b^{*2})^{1/2}$$

avec

$$\Delta a^* = a^* \text{ (allège) - } a^* \text{ (vitrage-vision)}$$

$$\Delta b^* = b^* \text{ (allège) - } b^* \text{ (vitrage-vision)}$$

$$\Delta L = L \text{ (allège) - } L \text{ (vitrage-vision)}$$

On considérera que l'on a une « harmonie » d'aspect en réflexion extérieure entre allège et vitrage-vision qui est excellente si la valeur de ΔE est inférieure à 2, et qui est encore suffisante si la valeur de ΔE est inférieure à 3.

Le tableau 4 ci-dessous récapitule les valeurs de ΔE(ref) et ΔE(invention) pour les 4 valeurs de $T_L$ des vitrages-vision de type X et de type Y :

TABLEAU 4

| $T_L$ | VITRAGE-VISION type X | | VITRAGE-VISION Type Y | |
|---|---|---|---|---|
| | ΔE(ref) | ΔE(invention) | ΔE(ref) | ΔE(invention) |
| 8 | 0,9 | 0,95 | 0,6 | 2,1 |
| 14 | 2,3 | 1,41 | 2,4 | 1,8 |
| 20 | 3,9 | 1,46 | 3,4 | 1,4 |
| 32 | 6,3 | 1,38 | 5,1 | 3,9 |

De ce tableau peuvent être tirées les conclusions suivantes : l'harmonie sur l'aspect en réflexion lumineuse entre vitrages-vision et allèges n'est pas remise en cause si l'on modifie dans l'allège l'empilement de couches minces utilisé avec succès dans le vitrage-vision afin d'éviter, conformément à l'invention, toute dégradation par un processus photocatalytique.

Au contraire, on arrive même dans certains cas à diminuer significativement la valeur de ΔE que l'on obtient avec une allège standard non modifiée. On parvient ainsi, plus particulièrement pour les allèges correspondant aux vitrages-vision de type « X » et « Y » de $T_L$ « moyenne », c'est-à-dire 14 et 20%, à avoir un écart colorimétrique qui parvient à franchir le seuil de 2, en ajustant légèrement les épaisseurs des couches par rapport à celles des vitrages-vision. Cet ajustement consiste notamment, pour les allèges de type « X », à diminuer un peu l'épaisseur de la couche

de $NiCrN_x$ (modification à 5 à 10% près au plus), et pour les allèges de type « Y » à diminuer l'épaisseur de la première couche de $SnO_2$ (modification d'au plus 20 à 30% près) et à augmenter légèrement l'épaisseur de la couche de $NiCrN_x$. Ces modifications d'épaisseur permettent ainsi de « compenser » optiquement au mieux l'absence, dans l'allège, de la dernière couche présente dans le vitrage-vision.

Dans une troisième série d'exemples 7 à 10, on a adapté selon l'invention la configuration de quatre autres « vitrages-vision » pour en faire des allèges à l'aide du même type de vernis opacifiant que celui utilisé pour les exemples précédents, sur un substrat de verre clair monolithique de 6 mm.

Le tableau 5 ci-dessous rappelle pour chaque exemple, dans la version vitrage-vision et dans la version allège la couche ou l'empilement de couches (2) dont est muni le substrat de verre : (toutes les couches sont déposées par pulvérisation cathodique assistée par champ magnétique de manière connue).

TABLEAU 5

| EXEMPLES | VERSION «VITRAGE-VISION» | VERSION «ALLEGE» |
|---|---|---|
| 7 | TiN | TiN/$NiCrN_x$ |
| 8 | acier inox/TiN | Acier inox/TiN/$NiCrN_x$ |
| 9 | NiCrNx/$TiO_2$ | $NiCrN_x$ |
| 10 | $SnO_2$/$NiCrN_x$/$TiO_2$ | $SnO_2$/$NiCrN_x$ |

Selon l'exemple 7, la couche fonctionnelle filtrante est en nitrure de titane. Or il s'est révélé que ce TiN se passivait, (ou les conditions de dépôt étaient telles), que de facto il contenait un certain taux en oxygène, sous une forme mixte $TiO_2$/TiN qui présentait une activité photocatalytique. La version allège de l'invention a consisté à la surmonter d'une couche en $NiCrN_x$ l'isolant du contact avec le vernis.

Dans cet exemple, la couche fonctionnelle de TiN a une épaisseur qui peut aller, notamment, d'environ 10 à 100 nm, notamment d'environ 15 à 80 nm selon le niveau de transmission lumineuse $T_L$ voulu pour le vitrage-vision (généralement de 10 à 50%), la surcouche de $NiCrN_x$ de l'allège peut être efficace même si elle est très mince. Ainsi, elle n'est que d'environ 0,5 à 2 nm, par exemple d'environ 1,4 nm. On peut aussi la choisir plus épaisse, par exemple jusqu'à 10 nm.

Selon l'exemple 8, la couche fonctionnelle du vitrage-vision est en acier inox, surmontée d'une fine couche de TiN (environ 10 à 30 nm, notamment 15 à 20 nm) pour en augmenter la dureté mécanique. Dans la version allège, on surmonte le bi-couche d'une couche de $NiCrN_x$ comme à l'exemple 7 pour éviter que le TiN se passivant en $TiO_2$ n'exerce d'activité photocatalytique contre le vernis. (Là encore, la couche en acier inox est d'épaisseur variable suivant le niveau de $T_L$ voulu d'environ 5 à 50%).

Selon l'exemple 9, la couche fonctionnelle du vitrage-vision est en $NiCrN_x$, surmontée d'une couche de $TiO_2$ de protection et d'ajustement optique/colorimétrique. La couche de $TiO_2$ est de 7 nm (5 à 10 nm) et sert à protéger mécaniquement la couche fonctionnelle. Cette dernière a une épaisseur que l'on peut moduler pour avoir un niveau de $T_L$ de 5 à 50%. Dans l'allège, la surcouche est supprimée, car elle est photocatalytique.

Selon l'exemple 10, l'empilement du vitrage-vision de l'exemple 9 est complété par une sous-couche en $SnO_2$, d'épaisseur 80 à 100 nm (50 à 150 nm), qui a plutôt un rôle optique. Dans l'allège, comme à l'exemple précédent, la dernière couche de $TiO_2$ a été supprimée.

Pour évaluer l'intérêt des allèges selon l'invention par rapport aux allèges standards reprenant intégralement l'empilement de couches du vitrage-vision correspondant, des tests ont été effectués, en faisant subir aux allèges standards et selon l'invention un rayonnement ultraviolet selon la norme STM G 26, puis en les immergeant dans de l'eau déminéralisée à 60°C pendant 2 heures. Après séchage, la durabilité est évaluée en amorceant le décollement du vernis par une lame de rasoir. Les résultats sont concluants : pour les allèges standards dont les empilements de couches s'achèvent par une couche de $TiO_2$ (allèges standards correspondant aux empilements des vitrages-vision des exemples 9 et 10), on observe un décollement au moins partiel du vernis dès 1000 heures d'enceinte U.V. Pour les allèges standards dont les empilements de couches s'achèvent par du TiN ($TiO_xN_y$ en fait), (cf. empilements des vitrages-vision des exemples 7 et 8 du type de ceux présentant une $T_L$ d'au moins 30%), un décollement peut être observé vers 1500 à 2000 heures d'enceinte U.V.

Par contre, pour les allèges selon l'invention où les empilements s'achèvent par du $NiCrN_x$, on n'observe toujours aucun décollement à 2000 heures.

A noter que les couches de $NiCrN_x$ sont extrêmement efficaces par rapport au but fixé dans l'invention, bien qu'elles puissent être très fines. Or, cette finesse est avantageuse, en ce sens qu'elle n'amène que très peu (voir aucune) modification colorimétrique défavorable par rapport à une allège standard qui en est dépourvue.

Un dernier exemple conforme à l'invention concerne un vitrage feuilleté à couche fonctionnelle à base d'argent. De manière connue, on a, notamment pour des applications en tant que parebrise automobile, des structures de vitrages du type :

verre 1/empilement 2/feuille intercalaire thermoplastique/verre 2

La feuille thermoplastique est usuellement en polyvinylbutyral (PVB).

L'empilement est du type diélectrique/couche métallique type argent/diélectrique, avec éventuellement sur une au moins des faces de la couche d'argent une fine couche métallique du type NiCr, à fonction de nucléation ou en tant que couche « sacrificielle », ce qui est connu.

Il se trouve ainsi des empilements du type

$$ZnO/Ag/ZnO \text{ ou } ZnO/Ag/SnO_2$$

On a donc en contact avec le PVB des couches d'oxyde photocatalytique, tendant à le dégrader. L'empilement modifié selon l'invention a été :

oxyde (type ZnO)/Ag/éventuellement couche sacrificielle type NiCr/ZnO ou $SnO_2$/couche « écran » selon l'invention,

avec comme couche « écran » soit une fine couche à base de NiCr, soit une fine couche à base de $SiO_2$. Une amélioration notable de la durabilité, de l'adhérence couches/PVB a été observée dans le temps.

On peut donc, grâce à l'invention, augmenter la durée de vie d'un élément vitré du type allège sans être, en contrepartie, pénalisé sur d'autres propriétés, notamment optiques.

L'invention a donc permis d'identifier une raison du vieillissement prématuré de certains vitrages montés en extérieur associant substrat rigide type verre, polymère et couches minces, et de parer, dans la plupart des cas, à ce problème. Elle permet, à tout le moins, de pouvoir estimer la durabilité de ces vitrages, de manière maîtrisée et reproductible, d'une série de vitrages à l'autre.

## Revendications

1. Panneau de parement de façade (1) du type allège consistant à ajouter un vernis opacifiant (3) à un vitrage autorisant la vision et muni d'un empilement de couches minces (2) filtrant une partie du rayonnement solaire de façon ce que l'empilement de couches minces (2) et le vernis opacifiant (3) soient en contact, la dernière couche dudit empilement, à base de matériau diélectrique, est un nitrure, carbure, oxynitrure ou oxycarbure et dont la différence de niveau d'énergie entre bande de conduction et bande de valence est d'au moins 4 e.v. et fait « écran » par rapport à une couche de l'empilement présentant une activité photocatalytique vis-à-vis dudit vernis opacifiant (3).

2. Panneau (1) selon la revendication 1, ***caractérisé en ce que*** la couche de l'empilement à activité photocatalytique est en oxyde de titane, en oxyde de zinc ou en oxyde d'étain.

3. Panneau (1) selon l'une des revendications précédentes, ***caractérisé en ce que*** le vernis opacifiant (3) essentiellement organique, notamment sous forme de feuille, est à base de polymère(s) thermodurcissable(s) ou thermoplastique(s), notamment du type résine polyester, époxyde-polyester, polyuréthane, acrylique, polyamide, polyester-uréthane, polyvinyl, fluorure de polyvinyle PVDF, polysaccharide.

4. Panneau (1) selon l'une des revendications précédentes, ***caractérisé en ce que*** la dernière couche dudit empilement (2) à base de matériau diélectrique est un oxycarbure du type SiOC.

5. Panneau (1) selon l'une des revendications précédentes, ***caractérisé en ce que*** la dernière couche dudit empilement (2) est en un matériau essentiellement amorphe.

6. Panneau (1) selon l'une des revendications précédentes, ***caractérisé en ce qu'un*** agent promoteur d'adhérence est disposé entre la dernière couche dudit empilement (2) et le vernis opacifiant (3), notamment appartenant à la famille des silanes tels que les organo-tri-alkoxysilanes.

7. Panneau (1) selon l'une des revendications précédentes, ***caractérisé en ce que*** le vernis opacifiant (3) comprend des additifs anti-ultraviolets tels que des amines à encombrement stérique.

8. Panneau (1) selon l'une des revendications précédentes, ***caractérisé en ce que*** le vernis opacifiant (3) est déposé sur un substrat rigide de type verre (1) revêtu de l'empilement de couches (2) sous forme pulvérulente, puis traité

thermiquement pour obtenir un revêtement continu solide.

9. Panneau (1) selon l'une des revendications 1 à 7, ***caractérisé en ce que*** le vernis opacifiant (3) est déposé sur un substrat rigide de type verre (1) revêtu de l'empilement de couches (2) par voie liquide, notamment par pulvérisation d'une solution, notamment suivie d'un traitement thermique pour obtenir un revêtement continu solide.

10. Panneau (1) selon l'une des revendications 1 à 7, ***caractérisé en ce que*** le vernis opacifiant (3) est déposé sur un substrat rigide de type verre (1) revêtu de l'empilement de couches (2), sous forme d'un film rendu adhérent, notamment par traitement thermique et/ou calandrage.

11. Panneau (1) selon l'une des revendications précédentes, ***caractérisé en ce que*** l'empilement de couches (2) comprend au moins une couche « fonctionnelle » en NiCr, acier, argent, ou une couche d'oxyde métallique dopé tel que $SnO_2$ :F ou ITO, ou une couche de nitrure métallique tel que TiN.

12. Panneau (1) selon la revendication 11, ***caractérisé en ce que*** la couche « fonctionnelle » est munie d'au moins une sous-couche et/ou une surcouche du type oxyde ou oxycarbure ou oxynitrure métallique ou de silicium.

13. Panneau (1) selon l'une des revendications précédentes, ***caractérisé en ce que*** l'empilement de couches minces (2) est choisi parmi $TiN/NiCrN_x$ ; acier inox/$TiN/NiCrN_x$ ; $SnO_2/NiCrN_x$.

## Claims

1. Facade facing panel (1) of the spandrel glass type consisting of adding an opacifying varnish (3) to a glazing allowing vision and provided with a stack of thin layers (2) filtering part of the solar radiation in such a way that the stack of thin layers (2) and the opacifying varnish (3) are in contact, the final layer of said stack, based on dielectric material, being a nitride, carbide, oxynitride or oxycarbide and whereof the energy level difference between the conduction band and the valence band is at least 4 e.v. and forms a "screen" with respect to a layer of the stack having a photocatalytic activity with respect to said opacifying varnish (3).

2. Panel (1) according to claim 1, **characterized in that** the stack layer having photocatalytic activity is of titanium oxide, zinc oxide or tin oxide.

3. Panel (1) according to one of the preceding claims, **characterized in that** the essentially organic opacifying varnish (3), particularly in the form of a sheet, is based on thermosetting or thermoplastic polymers, particularly of the epoxide-polyester, polyurethane, acrylic, polyamide, polyester-urethane, polyvinyl, polyvinyl fluoride, PVDF, polysaccharide or polyester resin type.

4. Panel (1) according to one of the preceding claims, **characterized in that** the final layer of said stack (2) based on dielectric material is an oxycarbide of the SiOC type.

5. Panel (1) according to one of the preceding claims, **characterized in that** the final layer of said stack (2) is an essentially amorphous material.

6. Panel (1) according to one of the preceding claims, **characterized in that** an adhesion promoting agent is placed between the final layer of said stack (2) and the opacifying varnish (3), particularly belonging to the family of silanes such as organo-trialkoxysilanes.

7. Panel (1) according to one of the preceding claims, **characterized in that** the opacifying varnish (3) incorporates anti-ultraviolet additives such as steric space requirement amines.

8. Panel (1) according to one of the preceding claims, **characterized in that** the opacifying varnish (3) is deposited on a rigid substrate of the glass type (1) covered with the stack of layers (2) in pulverulent form and then thermally treated to obtain a solid, continuous covering.

9. Panel (1) according to one of the claims 1 to 7, **characterized in that** the opacifying varnish (3) is deposited on a rigid, glass-type substrate (1) covered with the stack of layers (2) by the liquid route, particularly by spraying a solution, in particular followed by a heat treatment in order to obtain a continuous, solid covering.

10. Panel (1) according to one of the claims 1 to 7, **characterized in that** the opacifying varnish (3) is deposited on a rigid, glass-type substrate (1) covered by a stack of layers (2), in the form of a film made adhesive, particularly by heat treatment and/or a rolling process.

11. Panel (1) according to one of the preceding claims, **characterized in that** the stack of layers (2) includes at least one "functional" layer of NiCr, steel, silver, or a doped metal oxide layer such as $SnO_2$:F or ITO, or a metallic nitride layer such as TiN.

12. Panel (1) according to claim 11, **characterized in that** the "functional" layer is provided with at least one underlayer and/or overlayer of the silicon or metallic oxide or oxycarbide or oxynitride type.

13. Panel (1) according to one of the preceding claims, **characterized in that** the stack of thin layers (2) is chosen from among TiN/$NiCrN_x$, stainless steel/TiN/$NiCrN_x$ and $SnO_2$/$NiCrN_x$.

**Patentansprüche**

1. Paneel einer abgestützten Fassadenplatte (1), das hergestellt wird, indem ein undurchsichtig machender Lack (3) einem Glas, das die Durchsicht ermöglicht und mit einem Aufbau (2) aus dünnen Schichten versehen ist, die einen Teil der Sonneneinstrahlung filtern, derart hinzugefügt wurde, dass sich der Aufbau (2) aus dünnen Schichten und der undurchsichtig machende Lack (3) miteinander in Berührung befinden, wobei die letzte Schicht dieses Aufbaus auf der Basis eines dielektrischen Materials ist, das aus einem Nitrid, Carbid, Nitridoxid oder Carbidoxid besteht, und dessen Differenz der Energieniveaus zwischen Leitungsband und Valenzband mindestens 4 eV beträgt, und welche als "Schutzschild" in Bezug auf eine Schicht des Aufbaus dient, die eine photokatalytische Aktivität gegenüber dem undurchsichtig machenden Lack (3) besitzt.

2. Paneel (1) nach Anspruch 1, **dadurch gekennzeichnet, dass** die Schicht des Aufbaus mit photokatalytischer Aktivität aus Titanoxid, Zinkoxid oder Zinnoxid besteht.

3. Paneel (1) nach einem der vorhergehenden Ansprüche, **dadurch gekennzeichnet, dass** der insbesondere in Form einer Folie vorliegende, im Wesentlichen organische undurchsichtig machende Lack (3) auf der Basis von (einem) wärmeaushärtbaren oder thermoplastischen Polymer(en), speziell vom Typ Polyesterharz, Epoxid-Polyester-Harz, Polyurethanharz, Acrylharz, Polyamidharz, Polyesterurethanharz, Polyvinylharz, Polyvinylfluoridharz, PVDF, und Polysaccharidharz, ist.

4. Paneel (1) nach einem der vorhergehenden Ansprüche, **dadurch gekennzeichnet, dass** die letzte Schicht des Aufbaus (2) auf Basis eines dielektrischen Materials aus einem Carbidoxid vom Typ SiOC besteht.

5. Paneel (1) nach einem der vorhergehenden Ansprüche, **dadurch gekennzeichnet, dass** die letzte Schicht des Aufbaus (2) aus einem im Wesentlichen amorphen Material besteht.

6. Paneel (1) nach einem der vorhergehenden Ansprüche, **dadurch gekennzeichnet, dass** zwischen der letzten Schicht des Aufbaus (2) und dem undurchsichtig machenden Lack (3) ein Haftmittel, das insbesondere zur Klasse der Silane gehört, wie ein Organotrialkoxysilan, angeordnet wird.

7. Paneel (1) nach einem der vorhergehenden Ansprüche, **dadurch gekennzeichnet, dass** der undurchsichtig machende Lack (3) UV-Absorber wie sterisch behinderte Amine enthält.

8. Paneel (1) nach einem der vorhergehenden Ansprüche, **dadurch gekennzeichnet, dass** der undurchsichtig machende Lack (3) auf ein mit dem Schichtaufbau (2) überzogenes starres Substrat (1) vom Typ Glas pulverförmig aufgebracht und anschließend thermisch behandelt wird, um eine ununterbrochene feste Beschichtung zu erhalten.

9. Paneel (1) nach einem der Ansprüche 1 bis 7, **dadurch gekennzeichnet, dass** der undurchsichtig machende Lack (3) auf ein mit dem Schichtaufbau (2) überzogenes starres Substrat (1) vom Typ Glas in flüssiger Form, speziell durch Versprühen einer Lösung, aufgebracht wird und insbesondere darauf eine Wärmebehandlung folgt, um eine ununterbrochene feste Beschichtung zu erhalten.

**10.** Paneel (1) nach einem der Ansprüche 1 bis 7, **dadurch gekennzeichnet, dass** der undurchsichtig machende Lack (3) in Form einer haftfähig gemachten Folie insbesondere durch Wärmebehandlung und/oder Kalandrieren auf ein mit dem Schichtaufbau (2) überzogenes starres Substrat (1) vom Typ Glas aufgebracht wird.

**11.** Paneel (1) nach einem der vorhergehenden Ansprüche, **dadurch gekennzeichnet, dass** der Schichtaufbau (2) mindestens eine Funktionsschicht aus NiCr, Stahl bzw. Silber, eine Schicht aus einem dotierten Metalloxid wie $SnO_2$:F bzw. ITO oder eine Schicht aus einem Metallnitrid wie TiN enthält.

**12.** Paneel (1) nach Anspruch 11, **dadurch gekennzeichnet, dass** die Funktionsschicht mit mindestens einer Unterschicht und/oder einer Deckschicht vom Typ Oxid, Carbidoxid oder Nitridoxid von Silicium oder einem Metall versehen ist.

**13.** Paneel (1) nach einem der vorhergehenden Ansprüche, **dadurch gekennzeichnet, dass** der Aufbau (2) aus dünnen Schichten aus $TiN/NiCrN_x$, rostfreiem Stahl/$TiN/NiCrN_x$ und $SnO_2/NiCrN_x$ ausgewählt ist.

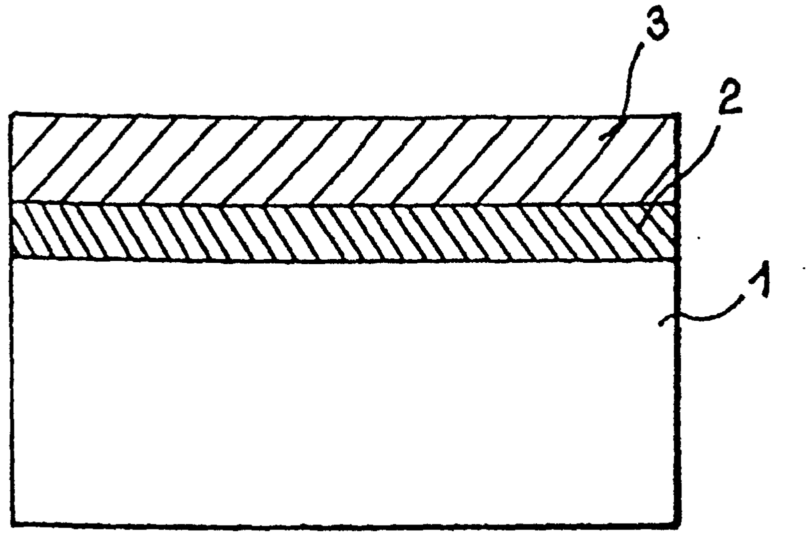


FIG_1